# EUROPÄISCHE PATENTSCHRIFT

(11) **EP 0 425 773 B1**
(45) Veröffentlichungstag und Bekanntmachung des Hinweises auf die Patenterteilung: **11.01.1995**
(21) Anmeldenummer: 90114913.8
(22) Anmeldetag: 03.08.1990
(51) Int. Cl.: B23B 31/26, B23B 31/02, B23Q 3/12, B23B 31/30

(54) **Betätigungsvorrichtung für einen Werkzeug- oder Werkstückspanner in einer Werkzeugmaschinenspindel**
Actuator for the tool or workpiece clamping device of a machine tool spindle
Dispositif de manoeuvre pour l'organe de fixation d'un outil ou d'une pièce dans la broche d'une machine outil

(30) Priorität: 30.10.1989 DE 3936122
(43) Veröffentlichungstag der Anmeldung: 08.05.1991
(73) Patentinhaber: OTT-JAKOB GmbH & Co. Spanntechnik KG, 87663 Lengenwang (DE)
(72) Erfinder: Bauch, Karl, Dipl.-Ing., D-8960 Kempten (DE); Ziegeltrum, Franz, Dipl.-Ing., D-8960 Kempten (DE); Heel Helmut, D-8951 Lengenwang (DE)
(74) Vertreter: Liebau, Gerhard, Dipl.-Ing.

(56) Entgegenhaltungen:
- DE-A- 2 741 166
- DE-A- 3 801 509
- DE-A- 3 813 670
- DE-U- 8 014 064
- PROSPEKT DER FIRMA A. OTT 10. Mai 1987, Seiten 1-6,Kempten, DE; "Mit Präzision zum Erfolg, OTT-Werkzeugspanner"
- SOVIET INVENTIONS ILLUSTRATED Sektion Mechanik, Woche 8933,27. September 1989, Zusammenfassung Nr. 239771 P/54, Derwent Publications Ltd.,London, GB; & SU - A - 1458109 (ODESS MILLINGMACHI) 15.02.1989

## Beschreibung

Die Erfindung betrifft eine Betätigungsvorrichtung für einen Werkzeug- oder Werkstückspanner in einer Werkzeugmaschinenspindel, mit einer in der Spindel unter Wirkung einer Federanordnung in Spannrichtung axial verschiebbaren Spannstange und einem zwischen der Spindel und der Spannstange angreifenden Keilgetriebe mit frei beweglichen Kugeln, die sich jeweils an drei Konusflächen abstützen, von denen die erste Konusfläche an einer auf der Spannstange unter Wirkung der Federanordnung in Spannrichtung axial verschiebbaren Spannhülse, die zweite Konusfläche an einem mit der Spannstange verbundenen Spannring und die dritte Konusfläche an einem gegenüber der Spindel stationär angeordneten Widerlagerring vorgesehen ist, wobei die zweite und die dritte Konusfläche so zueinander geneigt sind, daß bei Bewegung der Spannstange entgegen der Spannrichtung Selbsthemmung zwischen diesen Konusflächen und den dazwischen befindlichen Kugeln eintritt, und mit einer Kolben-Zylinder-Einheit, deren Kolben in einer ersten Phase seines entgegen der Spannrichtung gerichteten Lösehubes zunächst auf die Spannhülse und in einer zweiten Phase auch auf einen Ringabsatz der Spannstange einwirkt.

Bei einer bekannten Betätigungsvorrichtung dieser Art (Prospekt der Firma A. Ott, Kempten, "Mit Präzision zum Erfolg, Ott-Werkzeugspanner", Ausgabe 1986, Seite 3) dient das Keilgetriebe dazu, beim Spannen die von der Federanordnung auf die Spannstange wirkende Kraft zu verstärken, um damit die Einzugskraft (Spannkraft) des Werkzeug- oder Werkstückspanners zu vergrößern. Außerdem dient das Keilgetriebe auch dazu, die Spannstange gegenüber der Spindel in gespanntem Zustand zu verriegeln, damit bei einem Ausfall der Federanordnung, z.B. durch Federbruch, oder auch bei entgegen der Spannrichtung auf das Werkzeug oder das Werkstück wirkenden erhöhten Auszugskräften das vom Spanner gespannte Teil sicher gehalten wird. Die Kolben-Zylinder-Einheit dient bei dieser bekannten Betätigungsvorrichtung nicht nur zum Spannen der Federanordnung und zum Lösen der am vorderen Ende der Spannstange angeordneten Spannzange, sondern auch zum Ausstoßen des Werkzeuges aus der Spindel. Da ein großer Teil der von der Kolben-Zylinder-Einheit aufgebrachten Kraft zum Spannen der Federanordnung gebraucht wird, steht nur ein Teil dieser Kraft zum Ausstoßen des Werkzeuges zur Verfügung. Bei Steilkegelwerkzeugen tritt nun das Problem auf, daß sich bei hohen Spindeldrehzahlen der Aufnahmekegel der Spindel aufweitet und das Werkzeug unter Wirkung der Federanordnung weiter in den Aufnahmekegel eingezogen wird. Beim Ausstoßen ist deshalb ein Schrumpfsitz zu überwinden. Außerdem werden bei hohen Spindeldrehzahlen die Kugeln durch Fliehkraft in den keilförmigen Ringspalt zwischen den Konusflächen von Widerlagerring und Spannring gedrückt und hierdurch die Einzugskraft ungewollt erhöht. Zum Ausstoßen ist dann ebenfalls eine höhere Ausstoßkraft erforderlich. Zur Erzeugung dieser hohen Ausstoßkraft ist eine entsprechend groß dimensionierte Kolben-Zylinder-Einheit und/oder hoher Betriebsdruck hierfür erforderlich. Wird eine Vergrößerung der Einzugskraft gewünscht, so ist dies nur durch Vergrößerung der Federanordnung möglich, die wiederum auch eine Vergrößerung der Kolben-Zylinder-Einheit und/oder des Betriebsdruckes erforderlich macht. Um beim Spannen einen ausreichenden Spannhub der Spannstange zu erzeugen, ist ferner eine Federanordnung von verhältnismäßig großer Baulänge erforderlich. Außerdem ist bei dem bekannten Spanner der Spannhub durch den Durchmesser der Kugeln begrenzt, da der Spannring am Ende des Lösehubes an dem Widerlagerring anstößt. Der Spannhub ist stets etwas kleiner als der Kugeldurchmesser. Diesen kann man nicht beliebig groß wählen, da mit wachsendem Kugeldurchmesser einerseits die Baugröße zunimmt und andererseits auch die durch die Fliehkraft verursachte ungewollte Verstärkung der Einzugskraft.

Aufgabe der Erfindung ist es deshalb, eine Betätigungsvorrichtung für einen Werkzeug- oder Werkstückspanner in einer Werkzeugmaschinenspindel der eingangs genannten Art zu schaffen, die bei verringerter Baulänge der Federanordnung eine erhöhte Ausstoßkraft aufweist, bei der keine ungewollte Erhöhung der Einzugskraft durch Fliehkraftwirkung eintritt und deren Spannhub unabhängig vom Kugeldurchmesser ist.

Dies wird bei den eingangs genannten Betätigungsvorrichtung nach der Erfindung dadurch erreicht, daß an dem Widerlagerring in einem zwischen der dritten Konusfläche und der Federanordnung liegenden Bereich desselben eine vierte Konusfläche vorgesehen ist, die gegenüber der Spannstangenachse entgegengesetzt zur dritten Konusfläche geneigt ist und die sich zur Federanordnung hin konisch erweitert, derart, daß sich die Kugeln zu Beginn des von der Federanordnung bewirkten Spannhubes an der vierten Konusfläche abstützen und wegübersetzend auf den Spannring einwirken, in einer zweiten Phase des Spannhubes sich an der dritten Konusfläche abstützen und kraftverstärkend auf den Spannring einwirken und in einer letzten Phase des entgegengesetzt gerichteten Lösehubes sich wieder an der vierten Konusfläche abstützen und kraftverstärkend auf die Spannhülse in Richtung der Federanordnung einwirken, daß der Außendurchmesser des Spannringes Kleiner ist als als der Innendurchmesser des Widerlagerringes an der radial engsten Stelle, und daß der Kolben der Kolben-Zylinder-Einheit mit einem den Spannring konzentrisch umgebenden, im Bereich der Kugeln vorgesehenen Lösering über eine wegabhängig wirkende Verriegelungseinrichtung lösbar verbunden ist, die während einer ersten Phase des Lösehubes des Kolbens diesen axial schuhfest mit dem Lösering verriegelt und wegabgängig diese Verriegelung löst, kurz bevor die Kugeln die radial engste Stelle der dritten Konusfläche erreicht haben und zu diesem Zeitpunkt der Kolben bzw. ein Fortsatz desselben am Ringabsatz der Spannstange anliegt.

Bei der neuen Betätigungsvorrichtung tritt zu Beginn des von der Federanordnung bewirkten Spannhubes eine Wegübersetzung ein. Dies hat den Vorteil, daß in der ersten Phase des Werkzeug- oder Werkstückeinzuges, in der nur sehr geringe Kräfte benötigt werden, mit wenig Federweg der gewünschte Einzugsweg der Spannstange erreicht wird. Der geringere Federweg erfordert weniger Federlänge und man kann damit die axiale Länge der Federanordnung bis zur Hälfte der sonst üblichen axialen Länge verringern. Da sich in der letzten Phase des entgegengesetzt gerichteten Lösehubes die Kugeln wieder an der vierten Konusfläche abstützen und kraftverstärkend auf die Spannhülse in Richtung der Federanordnung einwirken, wird zum Spannen der Federanordnung in der letzten Phase des Lösehubes nur noch ein kleiner Teil der Kolbenkraft benötigt. Durch den geringeren Kraftbedarf zur Vorspannung der Federanordnung verbleibt mehr Kolbenkraft zum Ausstoßen des Werkzeuges. Ferner kann bei der neuen Betätigungsvorrichtung die dritte Konusfläche in einem verhältnismäßig kleinen Neigungswinkel gegenüber der Spannstangenachse geneigt sein. Dies hat zur Folge, daß Fliehkräfte, die bei hohen Drehzahlen auf die Kugeln einwirken, nur eine geringe Axialkraft auf den Spannring erzeugen, die gegenüber der von der Federanordnung erzeugten Axialkraft unwesentlich ist und größtenteils durch Reibung aufgezehrt wird. Infolgedessen tritt auch keine ungewollte Erhöhung der Einzugskraft ein. Ferner ist der Spannhub der Spannstange unabhängig vom Durchmesser der Kugeln, da der Spannringaußendurchmesser kleiner sein kann als der Innendurchmesser des Widerlagerringes an dessen engster Stelle. Infolgedessen ist der Hub der Spannstange nicht begrenzt.

Vorteilhafte Ausgestaltungen der Erfindung sind in den Unteransprüchen gekennzeichnet.

Die Erfindung ist in folgendem, anhand von mehreren in der Zeichnung dargestellten Ausführungsbeispielen näher erläutert. Es zeigen:
- Figur 1: einen Längsschnitt eines kompletten Werkzeugspanners,
- Figur 2: einen Teillängsschnitt eines ersten Ausführungsbeispieles der Betätigungseinrichtung, oben am Ende des Spannhubes, unten am Ende des Lösehubes,
- Figur 3: zwei verschiedene Zwischenstellungen der in Figur 2 gezeigten Betätigungsvorrichtung während des Lösehubes,
- Figur 4: einen Teillängsschnitt eines zweiten Ausführungsbeispieles,
- Figur 5: einen Teillängsschnitt eines dritten Ausführungsbeispieles der Betätigungseinrichtung, oben am Ende des Spannhubes, unten am Ende des Lösehubes,
- Figur 6: einen Teillängsschnitt eines vierten Ausführungsbeispieles der Betätigungsvorrichtung, oben am Ende des Spannhubes, unten am Ende des Lösehubes,
- Figur 7: einen Teillängsschnitt eines fünften Ausführungsbeispieles der Betätigungsvorrichtung, oben am Ende des Spannhubes, unten am Ende des Lösehubes.

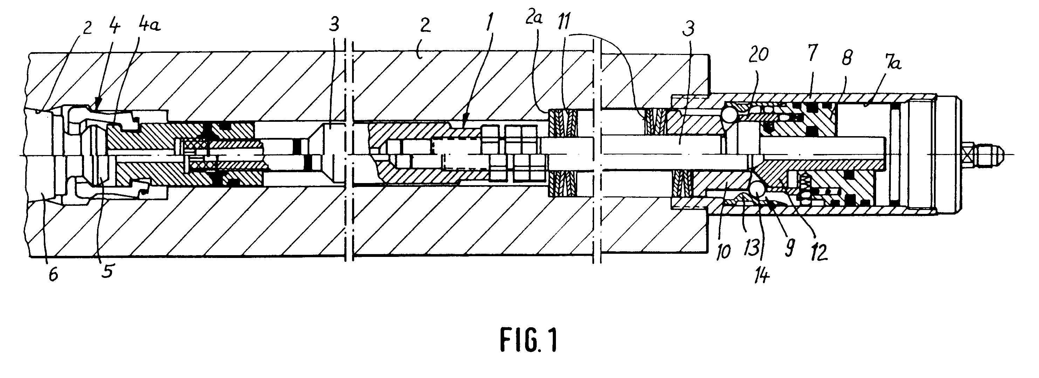

In Figur 1 ist ein kompletter Werkzeugspanner 1 dargestellt, der in eine Werkzeugmaschinenspindel 2 eingebaut ist. In der oberen Hälfte der Figur 1 ist der Werkzeugspanner 1 in seiner Lösestellung, in der unteren Hälfte in seiner Spannstellung gezeigt. Die Spannstange 3 ist in Richtung ihrer Achse A axial gegenüber der Spindel verschiebbar und trägt an ihrem werkzeugseitigen Ende eine Spannzange 4, die beispielsweise an dem Anzugsbolzen 5 eines Werkzeuges mit Steilkegelschaft 6 angreift. Es ist ferner ein in die Spindel 2 fest einschraubbares Zylindergehäuse 7 vorgesehen, welches eine hydraulische Kolben-Zylinder-Einheit mit einem in dem Zylinder 7a verschiebbaren Kolben 8 enthält. In dem Zylindergehäuse 7 ist ferner ein Keilgetriebe 9 angeordnet, dessen Aufbau und Wirkungsweise nachfolgend noch näher erläutert wird. Die Spannstange 3 ist ferner von einer Federanordnung 11 umgeben, die aus einer Vielzahl von Tellerfedern besteht. Die Federanordnung 11 stützt sich einerseits an einem Absatz 2a der Spindel 2 und andererseits an einer auf der Spannstange 3 axial verschiebbaren Spannhülse 10 ab. Mit der Zugstange 3 ist ein Spannring 12 fest verbunden, der zweckmäßig mit der Zugstange 3 aus einem Teil besteht. An einem Ringabsatz 7b des Zylindergehäuses 7 stützt sich ein fest in das Zylindergehäuse 7 eingebauter Widerlagerring 13 ab. Das Keilgetriebe 9 weist mehrere frei bewegliche Kugeln 14 auf, die sich jeweils an drei Konusflächen abstützen. Eine erste Konusfläche 15 ist an der Spannhülse 10 vorgesehen. Die zweite Konusfläche 16 ist an dem Spannring 12 angeordnet. Der Widerlagerring 13 weist die dritte Konusfläche 17 auf. An dem Widerlagerring 13 ist in einem zwischen der dritten Konusfläche 17 und der Federanordnung 11 liegenden Bereich derselben eine vierte Konusfläche 18 vorgesehen, die gegenüber der Spannstangenachse A entgegengesetzt zur dritten Konusfläche geneigt ist. Diese vierte Konusfläche 18 erweitert sich zur Federanordnung 11 hin.

Die zweite Konusfläche 16 und die dritte Konusfläche 17 sind so zueinander geneigt, daß bei Bewegung der Spannstange 3 entgegengesetzt zur Spannrichtung S zwischen diesen Konusflächen 16, 17 und den dazwischen befindlichen Kugeln 14 Selbsthemmung auftritt. Bei den in der Zeichnung dargestellten Ausführungsbeispielen ist die zweite Konusfläche 16 in einem Neigungswinkel δ von etwa 45° und die dritte Konusfläche 17 in einem Neigungswinkel β von etwa 30° gegenüber der Spannstangenachse A geneigt. Der Neigungswinkel β der dritten Konusfläche gegenüber der Spannstangenachse A ist kleiner als der Neigungswinkel α der vierten Konusfläche 18 gegenüber der Spannstangenachse A. Die erste Konusfläche 15 und die vierte Konusfläche 18 sollten so zueinander geneigt sein, daß beim Spannhub der Spannhülse 10 in Richtung S keine Selbsthemmung zwischen diesen Konusflächen 15, 18 und den dazwischen befindlichen Kugeln 14 eintritt. Der Neigungswinkel γ der ersten Konusfläche 15 gegenüber der Spannstangenachse A beträgt bei den gezeigten Ausführungsbeispielen etwa 75°, während die vierte Konusfläche 18 einen Neigungswinkel α von etwa 45° mit der Spannstangenachse A einschließt.

Ferner sollte der Neigungswinkel β der dritten Konusfläche 17 gegenüber der Spannstangenachse A im Bereich der engsten Stelle 13a des Widerlagerringes 13 in Richtung zur Federanordnung hin abnehmen, was durch eine Abrundung zwischen den beiden Konusflächen 17, 18 erreicht wird. Durch die Verkleinerung des Neigungswinkels β zur engsten Stelle 13a hin, wird erreicht, daß in diesem Bereich die Selbsthemmung zwischen der zweiten Konusfläche 16 und der dritten Konusfläche 17 sowie den dazwischen befindlichen Kugeln 14 aufgehoben ist.

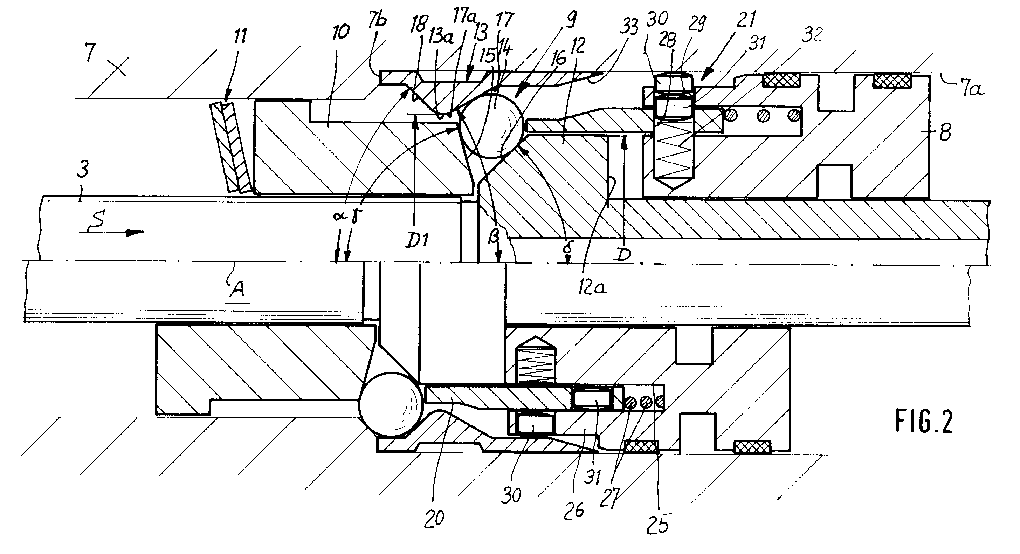

Um einen vom Durchmesser der Kugeln 14 unabhängigen Spannhub zu erreichen, ist es zweckmäßig, wenn der Außendurchmesser D des Spannringes 12 kleiner ist als der Innendurchmesser D1 des Widerlagerringes 13 an dessen radial engsten Stelle 13a. Infolgedessen kann der Spannring 12, wie es in Figur 2 unten dargestellt ist, beim Lösehub durch den Widerlagerring 13 axial hindurchtreten.

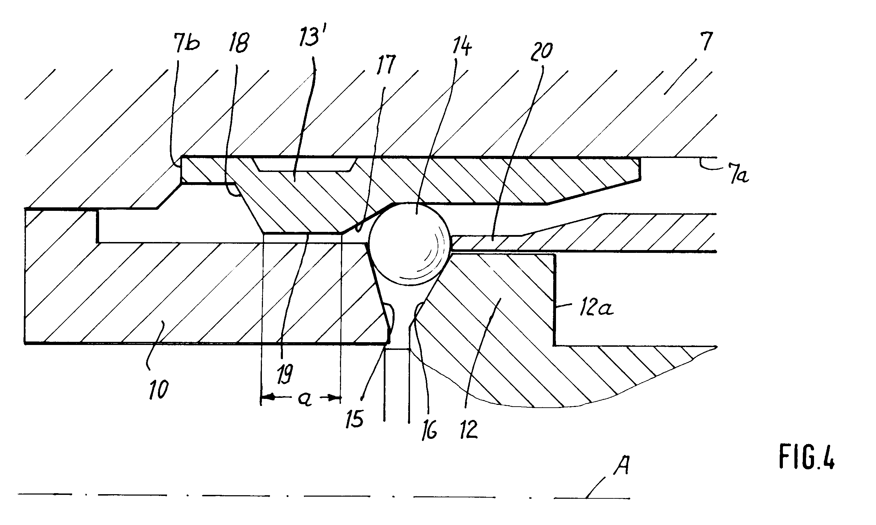

Durch die in Figur 4 dargestellte Ausführungsform kann man den Spannhub der Spannstange 3 beliebig groß gestalten. Bei dieser Ausführungsform weist der Widerlagerring 13′ zwischen der dritten Konusfläche 17 und der vierten Konusfläche 18 eine Zylinderfläche 19 auf, deren Achse mit der Spannstangenachse A zusammenfällt. Durch Verlängerung der axialen Länge a dieser Zylinderfläche 19 kann man den Spannhub der Zugstange 3 entsprechend verlängern.

Da bei Bewegung der Spannstange 3 entgegen der Spannrichtung S Selbsthemmung zwischen den Konusflächen 16, 17 und den dazwischen befindlichen Kugeln 14 eintrit, könnte die Spannstange 3 mit ihrem Spannring 12 beim Lösehub nicht entgegen der Spannrichtung S nach links verschoben werden. Aus diesem Grund ist im Bereich der Kugeln 14 ein Lösering 20 erforderlich, der über eine wegabhängig wirkende Verriegelungseinrichtung 21, 22, 23, 24, wie sie in den Figuren 2, 5, 6 und 7 dargestellt und nachfolgend noch näher bechrieben ist, mit dem Kolben 8 lösbar verbunden ist. Diese Verriegelungsvorrichtungen wirken jeweils so, daß in einer ersten Phase des Lösehubes des Kolbens 8 dieser axial schubfest mit dem Lösering 20 verriegelt ist und diese Verriegelung wegabhängig gelöst wird, kurz bevor die Kugeln 14 beim Lösehub die radial engste Stelle 17a der dritten Konusfläche 17 erreicht haben.

Bevor nun die in den Figuren 2, 5, 6 und 7 dargestellten verschiedenen Verriegelungsvorrichtungen 21, 22, 23 und 24 näher erläutert werden, soll zunächst die allgemeine Wirkungsweise der Betätigungsvorrichtung anhand der Figuren 1 - 3 beschrieben werden.

Am Ende des Lösehubes der Betätigungsvorrichtung und des Ausstoßhubes der Spannstange 3 befinden sich die Teile in der in Figur 2 unten und Figur 1 oben dargestellten Position. Um das Werkzeug in die Spindel 2 einzuziehen wird der im Zylinder 7a herrschende Druck aufgehoben. Unter Wirkung der Federanordnung 11 wird die Spannhülse 10 in Spannrichtung S nach rechts verschoben. Durch die vierte Konusfläche 18 des Widerlagerringes 13 werden die Kugeln bei Bewegung der Spannhülse 10 nach rechts radial nach innen gedrückt und drücken auf die erste Konusfläche des Spannringes 12. Hierdurch findet eine Wegübersetzung in der Weise statt, daß der Spannring 12 um einen größeren Weg nach rechts verschoben wird als die Spannhülse 10, wodurch sich der axiale Abstand zwischen der Spannhülse 10 und dem Spannring 12 vergrößert. Dieses Verhalten hat den Vorteil, daß in der ersten Phase des Werkzeugeinzuges, in der nur sehr geringe Kräfte benötigt werden, mit wenig Federweg der gewünschte große Einzugsweg der Spannstange 3 erreicht wird. Infolge des geringeren Federweges kann die axiale Länge der Federanordnung 11 gegenüber bekannten Werkzeugspannern etwa auf die Hälfte verringert werden.

Sobald die Kugeln 14 die engste Stelle 13a des Widerlagerringes 13 erreicht haben, liegt keine Wegübersetzung mehr vor. Spaannhülse 10 und Spannring 12 werden auf einer Länge, die der axialen Länge der engsten Stelle 13a entspricht, gemeinsam mit gleichen Weglängen nach rechts verschoben. Bei dem in Figur 4 dargestellten Ausführungsbeispiel entspricht diese Weglänge der axialen Länge a der Zylinderfläche 19. Mit der Länge a dieser Zylinderfläche ist ohne Veränderung der Übersetzungsverhältnisse und ohne Veränderung der Durchmesser der Kugeln 14 die Verwirklichung auch großer Spannhübe der Spannstange 3 möglich. Wenn die Kugeln so weit nach rechts gedrückt sind, daß sie sich an der dritten Konusfläche 17 abstützen, erfolgt eine Kraftübersetzung. Die Kugeln 14 werden durch die Konusfläche 15 der Spannhülse 10 in den sich zum Kolben 8 verengenden Ringspalt zwischen den Konusflächen 16 und 17 gedrückt. Der Werkzeugschaft wird nunmehr mit einer Spannkraft, die ein Mehrfaches der Kraft der Federanordnung 11 ist, in den Aufnahmekegel 2b der Spindel eingezogen. Am Ende des Spannhubes nehmen die Teile die in Figur 2 oben und Figur 1 unten dargestellte Lage ein. Infolge der Selbsthemmung zwischen den Konusflächen 16, 17 und den dazwischen befindlichen Kugeln 14 kann das Werkzeug auch bei Kräften, die ein Mehrfaches der Spannkraft erreichen, nicht entgegen der Spannrichtung S aus dem Aufnahmekegel 2b herausgezogen werden.

Zum Werkzeugwechsel wird der Zylinder 7a mit Druck beaufschlagt. Unter diesem Druck wird der Kolben 8 nach links gedrückt. Der Lösering 20 ist über die Verriegelungseinrichtung 21 schubfest mit dem Kolben 8 verbunden und kommt an den Kugeln 14 zur Anlage. Der Lösering 20 drückt die Kugeln 14 nach links und schiebt somit die Spannhülse 10 ebenfalls nach links, wodurch die Federanordnung 11 gespannt wird. Bevor nun der weitere Lösehub beschrieben wird, soll zunächst die Verriegelungseinrichtung 21 erläutert werden.

Der Lösering 20 ist in einer axial gerichteten Ringnut 25 in einem axialen Fortsatz 26 des Kolbens entgegen der Kraft einer in der Ringnut 25 angeordneten Feder axial verschiebbar. Im Lösering 20 sind mehrere Radialbohrungen 28 vorgesehen, die in Verriegelungsstellung von Lösering 20 und Kolbenfortsatz 26 mit Radialbohrungen 29 im Fortsatz 26 fluchten. In jeder Radialbohrung 29 des Kolbenfortsatzes 26 ist ein Steuerstift 30 und in jeder Radialbohrung 28 des Löseringes 20 ein Sperrstift 31 angeordnet. Der Sperrstift 31 ist durch eine Druckfeder 32 radial nach außen belastet. Hierdurch greift der Sperrstift 31 in Verriegelungsstellung teilweise auch in die Radialbohrung 29 des Kolbenfortsatzes 26 ein. Der Lösering 20 und der Kolbenfortsatz 26 sind damit über die Sperrstifte 31 schubfest miteinander verbunden. Die Steuerstifte 30 stützen sich während einer ersten Phase des Lösehubes an der Wandung des Zylinders 7a ab. An dem Widerlagerring 13 ist ferner eine konische Steuerfläche 33 vorgesehen.

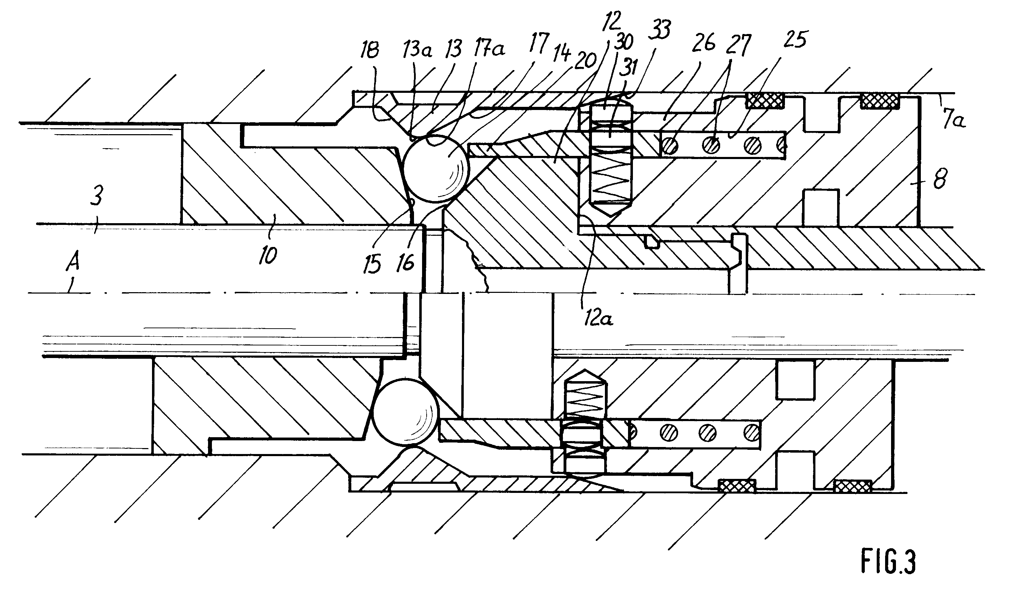

In der ersten Phase des nach links gerichteten Lösehubes des Kolbens 8 ist der Lösering 20 durch die Sperrstife 31 fest mit dem Kolbenfortsatz 26 verriegelt. Während der ersten Phase des Lösehubes wirkt damit die Kolbenkraft alleine auf den Lösering 20 ein, der die Kugeln 14 vor sich herschiebt. Der Kolben 8 nähert sich dem Spannring 12 und kommt schließlich an dessen Ringabsatz 12a zur Anlage. Während der zweiten Phase des Lösehubes wird nunmehr sowohl der Lösering 20, über den noch der größte Teil der Kolbenkraft fließt, als auch die Spannstange 3, jeweils um den gleichen Betrag nach links geschoben. Am Ende der zweiten Phase des Lösehubes, kurz bevor die Kugeln 14 die engste Stelle 13a des Widerlagerringes 13 erreicht haben, kommen die Kugeln 14 in den abgerundeten Bereich 17a der Konusfläche 17. In diesem Bereich liegt keine Selbsthemmung mehr vor. Zu diesem Zeitpunkt kommt auch die Konusfläche 16 wieder zur Anlage an den Kugeln 14 und es wechselt die Kraftübertragung der Kolbenkraft von dem Lösering 20 auf den Spannring 12. Hierdurch wird die Verriegelungseinrichtung 21 entlastet. Das Ende der zweiten Phase des Lösehubes ist in Figur 3 oben dargestellt. In dieser Phase werden die Steuerstifte 30 durch die Steuerfläche 33 radial nach innen gedrückt und drücken hierdurch die Sperrstifte 31 aus den Radialbohrungen 29 des Kolbenfortsatzes 26. Die Verriegelung zwischen Lösering 20 und Kolbenfortsatz 26 wird hiermit gelöst. Wenn die Kugeln 14 die engste Stelle 13a des Widerlagerringes passiert haben, kommen sie an der vierten Konusfläche 18 zur Anlage. Durch die Konusfläche 16 des Spannringes 12 werden die Kugeln 14 in den sich keilförmig verjüngenden Ringspalt zwischen den Konusflächen 18 und 15 gedrückt. Es erfolgt eine Kraftverstärkung und die Spannhülse 10 wird nunmehr unter Wirkung dieser Kraftverstärkung noch weiter nach links gegen die Federanordnung 11 gedrückt. Dies ist in Figur 3 unten dargestellt. Infolge der Kraftverstärkung wird nur noch ein geringer Anteil der Kolbenkraft für die Vorspannung der Federanardnung 11 benötigt. Es steht daher zum Ausstoßen des Werkzeuges nahezu die gesamte Kolbenkraft zur Verfügung. Diese Kolbenkraft drückt über den Ringabsatz 12a auf die Spannstange 3, und der Zangenhalter 4a, der sich nunmehr gemäß Figur 1 oben in Anlage an dem Anzugsbolzen 5 befindet, drückt das Werkzeug mit hoher Ausstoßkraft aus dem Aufnahmekegel 2b. Während dieser letzten Phase des Lösehubes bewegen sich die Kugeln 14 auf den Konusflächen 16 und 18 radial nach außen. Sie drücken dabei den entriegelten Lösering 20 entgegen der Kraft der Feder 27 in die Ringnut 25 des Kolbenfortsatzes 26. Wenn beim anschließenden Spannhub der Druck im Zylinder 7a aufgehoben wird, dann drückt die Feder 27 den Kolben 8 allmählich nach rechts, so daß bei weiterer Bewegung der Teile nach rechts die Sperrstifte 31 wieder in die Radialbohrungen 29 des Kolbenfortsatzes 26 eintreten und damit die zum Lösen erforderliche Verriegelung zwischen Lösering 20 und Kolbenfortsatz 26 wieder herstellen.

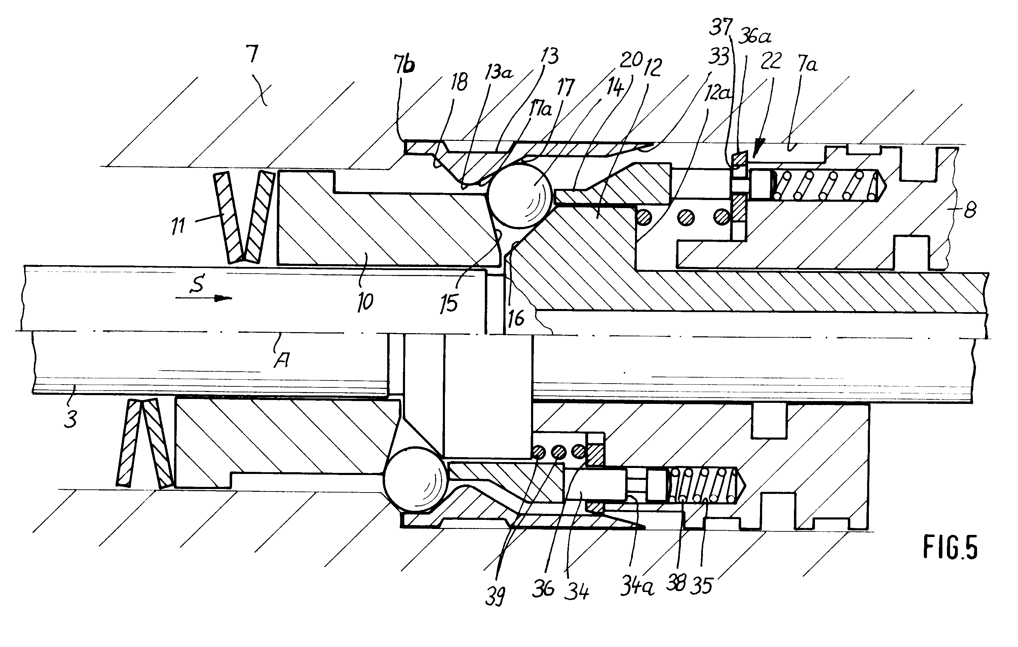

Die in den Figuren 5 - 7 dargestellten Ausführungsformen der Betätigungsvorrichtung unterscheiden sich nur durch die unterschiedliche Ausgestaltung der Verriegelungsvorrichtungen 22, 23 und 24 von dem vorhergehend beschriebenen Ausführungsbeispiel. Die vorhergehende Beschreibung der Funktion der Betätigungsvorrichtung gemäß den Figuren 1 - 3 trifft daher sinngemäß auch auf die in den Figuren 5 - 7 dargestellten Ausführungsbeispiele zu. Aus diesem Grund sind Teile gleicher Funktion mit den gleichen Bezugszeichen bezeichnet.

Bei dem in Figur 5 dargestellten Ausführungsbeispiel weist der Lösering 20 an seiner dem Kolben 8 zugekehrten Seite mehrere achsparallele Führungsbolzen 34 auf, die in achsparallelen Führungsbohrungen 35 des Kolbenfortsatzes 26 verschiebbar geführt sind. Jeder dieser Führungsbolzen 34 ist mit einer Ringnut 34a versehen. An der dem Lösering zugekehrten Stirnseite des Kolbenfortsatzes 26 ist ein geschlitzter, radial nach außen federnder Sperring 36 angeordnet. Dieser Sperring 36 weist im Bereich jedes Führungsbolzens 34 eine Durchgangsbohrung 37 auf, durch die sich der jeweilige Führungsbolzen hindurch erstreckt. Der Sperring 36 weist ferner an seinem Außenumfang eine mit der Steuerfläche 33 am Widerlagerring 13 zusammenwirkende Steuerkante 36a auf. In den Führungsbohrungen 35 sind ferner Druckfedern 38 vorgesehen. Ferner ist auch zwischen dem Kolbenfortsatz und dem Spannring 12 eine Druckfeder 39 angeordnet.

Zu Beginn des nach links gerichteten Lösehubes des Kolbens 8 ist der Lösering 20 über die Verriegelungseinrichtung 22 schubfest verbunden. Der geschlitzte Sperring 36 wird durch seine Vorspannung radial nach außen gedrückt und greift in die Ringnuten 34a der Führungsstifte 34 ein. Bei der Bewegung des Kolbens 8 nach links kommt die Steuerkante 36a auch in den Bereich der Steuerfläche 33, wodurch der Federring 36 entgegen seiner radialen Vorspannung radial nach innen gedrückt wird. Hierdurch wird der Sperring 36 aus den Ringnuten 34a gedrückt. Sobald seine Durchgangsbohrungen 37 mit den Führungsbohrungen 35 fluchten, ist die Verriegelung aufgehoben und der Lösering 20 kann sich nunmehr entgegen der Kraft der kleinen Druckfedern 38 zum Kolbenfortsatz 26 hin verschieben. Die Druckfeder 39, die sich am Kolbenfortsatz 26 abstützt, schiebt den Spannring 12 nach links, so daß seine Konusfläche 16 ständig in Kontakt mit den Kugeln 14 bleibt, jedoch ohne eine nennenswerte Kraft auf sie auszuüben. Die kleinen Druckfedern 38 sorgen dafür, daß der Lösering 20 während des Spannhubes wieder in seine Verriegelungsstellung gelangt, in welcher der Sperring 36 wieder in die Ringnuten 34a der Führungsstifte 34 einrastet.

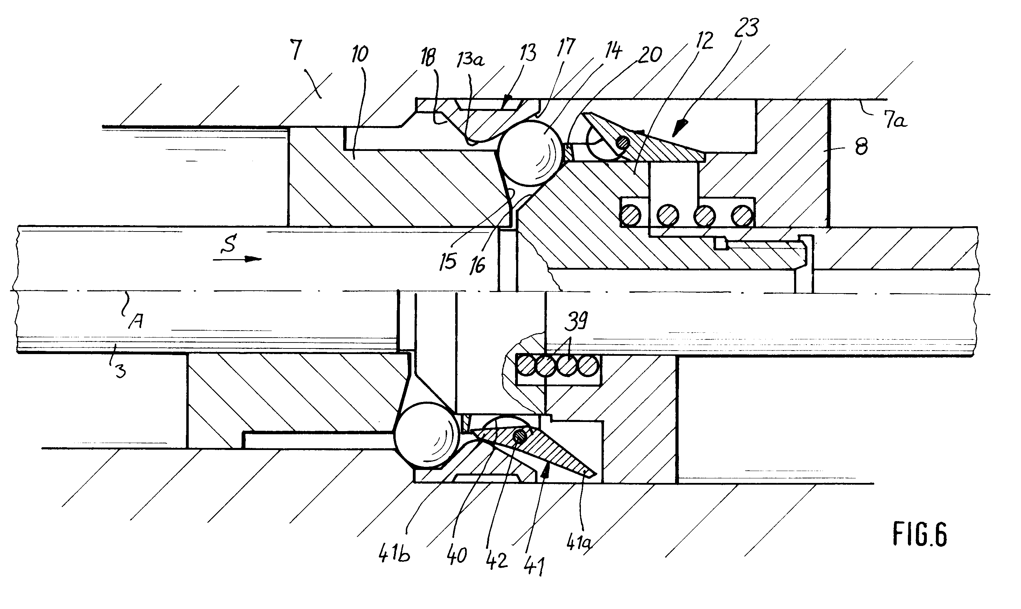

Bei dem in Figur 6 dargestellten Ausführungsbeispiel sind an dem Lösering 20 in axialen Schlitzen desselben mehrere axial gerichtete, durch Blattfedern 40 belastete, doppelarmige Sperrklinken 41 um Achsen 42 schwenkbar gelagert. Der eine Arm 41a jeder Sperrklinke 41 dient zur Verriegelung des Löseringes 20 gegenüber dem Kolben 8, während der andere Arm 41b mit einer Steuerfläche zusammenwirkt. Diese Steuerfläche wird bei diesem Ausführungsbeispiel durch die dritte Konusfläche 17 des Widerlagerringes 13 gebildet. In Verriegelungsstellung stützen sich die Sperrklinken 41 mit ihren Armen 41a an dem Kolben 8 ab, wodurch letzterer schubfest mit dem Lösering 20 verbunden wird. Die Druckfeder 39 hat die gleiche Funktion wie bei dem vorhergehenden Ausführungsbeispiel. Sie hält den Spannring 12 in ständigem Kontakt mit den Kugeln 14, ohne jedoch eine nennenswerte Kraft auf sie auszuüben. Sobald die Kugeln 14 in der Nähe der engsten Stelle 13a des Widerlagerringes 13 sind, kommen die Arme 41b an der Konusfläche 17 zur Anlage, wodurch sie radial nach innen gedrückt und hierdurch die Arme 41 radial nach außen geschwenkt werden. Die Verriegelung wird hierdurch gelöst. Die Blattfedern 40 sorgen dafür, daß während des Spannhubes die Sperrklinken wieder in ihre Sperrstellung zurückgeschwenkt werden. Während des Spannhubes sorgt die Druckfeder 39 dafür, daß der Kolben sich wieder vom Spannring 12 entfernt und damit die Sperrklinken 41 wieder in ihre Sperrstellung gelangen können.

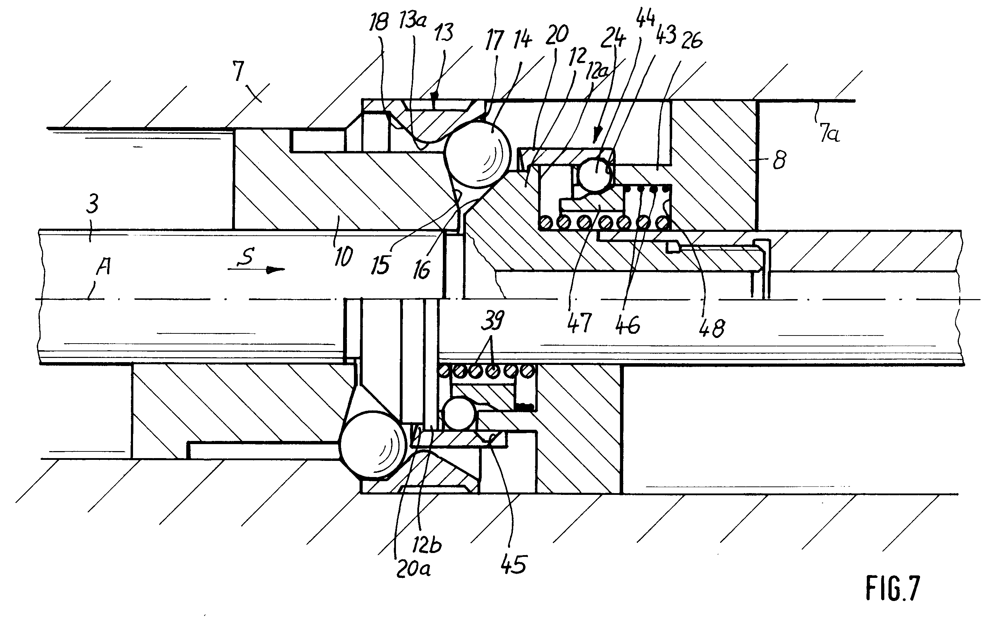

Bei dem in Figur 7 dargestellten Ausführungsbeispiel ist der Lösering 20 an einem axialen, ringförmigen Fortsatz 26 des Kolbens 8 axial verschiebbar gelagert. In dem Fortsatz 26 sind mehrere Radialbohrungen 43 mit darin angeordneten Sperrkugeln 44 vorgesehen. Diese Sperrkugeln 44 greifen in Verriegelungsstellung in eine Ringnut 45 am Lösering 20 ein. Es ist ferner ein zum Fortsatz 26 konzentrischer, durch eine schwache Druckfeder 46 belasteter Steuerring 47 vorgesehen. Dieser Steuerring 47 drückt die Sperrkugeln 44 zunächst radial nach außen in die Ringnuten 45, wodurch der Lösering 20 schubfest mit dem Kolbenfortsatz 26 verriegelt ist. Eine Druckfeder 39 zwischen dem Kolben 8 und dem Spannring 12 hat die bei den vorhergehenden Ausführungsbeispielen beschriebene Funktion.

Beim Lösehub des Kolbens 8 nach links werden die Kugeln 14 wie bei den vorhergehenden Ausführungsbeispielen durch den Lösering 20 aus der Selbsthemmung nach links gedrückt.

Sobald die Kugeln 14 kurz vor der radial engsten Stelle 13a des Widerlagerringes 13 sind, stößt der Steuerring 47 an dem Ringabsatz 12a des Spannringes 12 an. Im weiteren Verlauf wird der Steuerring 47 in die Ausnehmung 48 des Kolbens 8 gedrückt. Er gibt damit die Sperrkugeln 44 frei und diese können in den Radialbohrungen 43 radial nach innen gleiten. Auf diese Weise wird die Verbindung zwischen Lösering 20 und Kolben 8 gelöst. Der Kolbenfortsatz 26 kommt an dem Ringabsatz 12a zur Anlage und drückt dann, wie bei den vorhergehend beschriebenen Ausführungsbeispielen, den Spannring 12 und damit die Spannstange 3 nach links.

Während des Spannhubes drückt die Druckfeder 39 den Spannring 12 und den Kolben 8 wieder auseinander. Der Lösering wird hierbei durch einen an ihm angeordneten, radial nach innen gerichteten Ringabsatz 20a und durch einen am Spannring 12 vorgesehenen Ringabsatz 12b festgehalten. Sobald der Kolben 8 wieder seine in Figur 7 oben dargestellte Endlage erreicht hat, drückt der Steuerring 47 die Sperrkugel 44 wieder in die Ringnut 45 des Löseringes 20 und stellt damit die Verriegelung wieder her.

Die in Figur 7 dargestellte Ausführungsform der Verriegelungseinrichtung 24 könnte auch dahingehend abgewandelt werden, daß der Kolbenfortsatz den Lösering 20 konzentrisch umgibt und daß der Steuerring dann als radial äußerster Ring den Kolbenfortsatz 26 konzentrisch umgibt. In diesem Fall würde dann der Widerlagerring 13 als Anschlag für den Steuerring 47 dienen.

## Patentansprüche

1. Betätigungsvorrichtung für einen Werkzeug- oder Werkstückspanner (1) in einer Werkzeugmaschinenspindel (2), mit einer in der Spindel (7) unter Wirkung einer Federanordnung (11) in Spannrichtung (S) axial verschiebbaren Spannstange (3) und einem zwischen der Spindel (7) und der Spannstange (3) angreifenden Keilgetriebe (9) mit frei beweglichen Kugeln (14), die sich jeweils an drei Konusflächen (15,16,17) abstützen, von denen die erste Konusfläche (15) an einer auf der Spannstange (3) unter Wirkung der Federanordnung (11) in Spannrichtung (S) axial verschiebbaren Spannhülse (10), die zweite Konusfläche (16) an einem mit der Spannstange (3) verbundenen Spannring (12) und die dritte Konusfläche (17) an einem gegenüber der Spindel (7) stationär angeordneten Widerlagerring (13) vorgesehen ist, wobei die zweite und die dritte Konusfläche (16,17) so zueinander geneigt sind, daß bei Bewegung der Spannstange (3) entgegen der Spannrichtung (S) Selbsthemmung zwischen diesen Konusflächen (16,17) und den dazwischen befindlichen Kugeln (14) eintritt, und mit einer Kolben-Zylinder-Einheit (7a,8), deren Kolben (8) in einer ersten Phase seines entgegen der Spannrichtung (S) gerichteten Lösehubes zunächst auf die Spannhülse (10) und in einer zweiten Phase auch auf einen Ringabsatz (12a) der Spannstange (3) einwirkt, **dadurch gekennzeichnet**, daß an dem Widerlagerring (13) in einem zwischen der dritten Konusfläche (17) und der Federanordnung (11) liegenden Bereich desselben eine vierte Konusfläche (18) vorgesehen ist, die gegenüber der Spannstangenachse (A) entgegengesetzt zur dritten Konusfläche (17) geneigt ist und die sich zur Federanordnung (11) hin konisch erweitert, derart, daß sich die Kugeln (14) zu Beginn des von der Federanordnung (11) bewirkten Spannhubes der Spannhülse (10) an der vierten Konusfläche (18) abstützen und wegübersetzend auf den Spannring (12) einwirken, in einer zweiten Phase des Spannhubes sich an der dritten Konusfläche (17) abstützen und kraftverstärkend auf den Spannring (12) einwirken und in einer letzten Phase das entgegengesetzt gerichteten Lösehubes sich wieder an der vierten Konusfläche (18) abstützen und kraftverstärkend auf die Spannhülse (10) in Richtung der Federanordnung (11) einwirken, daß der Außendurchmesser (D) des Spannringes (12) kleiner ist als der Innendurchmesser (D1) des Widerlagerringes (13) an der radial engsten Stelle (13a), und daß der Kolben (8) der Kolben-Zylinder-Einheit (7a,8) mit einem den Spannring (12) konzentrisch umgebenden, im Bereich der Kugeln (14) vorgesehenen Lösering (20) über eine wegabhängig wirkende Verriegelungseinrichtung (21 bis 24) lösbar verbunden ist, die während einer ersten Phase des Lösehubes des Kolbens (8) diesen axial schubfest mit dem Lösering (20) verriegelt und wegabhängig diese Verriegelung löst, kurz bevor die Kugeln (14) die radial engste Stelle (17a) der dritten Konusfläche (17) erreicht haben und zu diesem Zeitpunkt der Kolben (8) bzw. ein Fortsatz (26) desselben am Ringabsatz (12a) der Spannstange (3) anliegt.

2. Betätigungsvorrichtung nach Anspruch 1, **dadurch gekennzeichnet**, daß der Neigungswinkel (β) der dritten Konusfläche (17) gegenüber der Spannstangenachse (A) kleiner ist als der Neigungswinkel (α) der vierten Konusfläche (18) gegenüber der Spannstangenachse (A).

3. Betätigungsvorrichtung nach mindestens einem der vorhergehenden Ansprüche, **dadurch gekennzeichnet**, daß die erste und die vierte Konusfläche (15, 18) so zueinander geneigt sind, daß beim Spannhub der Spannhülse (10) keine Selbsthemmung zwischen dienen Konusflächen (15, 18) und den dazwischen befindlichen Kugeln (14) eintritt.

4. Betätigungsvorrichtung nach mindestens einem der vorhergehenden Ansprüche, **dadurch gekennzeichnet**, daß der Neigungswinkel (β) der dritten Konusfläche (17) gegenüber der Spannstangenachse (A) im Bereich der radial engsten Stelle (13a) des Widerlagerringes (13) in Richtung zur Federanordnung (11) hin abnimmt, so, daß in diesem Bereich die Selbsthemmung zwischen der zweiten und der dritten Konusfläche (16, 17) und den dazwischen befindlichen Kugeln (14) aufgehoben ist.

5. Betätigungsvorrichtung nach mindestens einem der vorhergehenden Ansprüche, **dadurch gekennzeichnet**, daß der Widerlagerring (13') zwischen der dritten und der vierten Konusfläche (17, 18) eine Zylinderfläche (19) aufweist, deren Achse mit der Spannstangenachse (A) zusammenfällt.

6. Betätigungsvorrichtung nach Anspruch 1, **dadurch gekennzeichnet**, daß der Spannring (12) einstückig mit der Spannstange (3) ist.

7. Betätigungsvorrichtung nach mindestens einem der vorhergehenden Ansprüche, **dadurch gekennzeichnet**, daß die Verriegelungsvorrichtung (21, 22, 23) über eine am Widerlagerring (13) vorgesehene Steuerfläche (33) entriegelbar ist.

8. Betätigungsvorrichtung nach Anspruch 7, **dadurch gekennzeichnet**, daß die Steuerfläche (33) durch die dritte Konusfläche (17) gebildet ist.

9. Betätigungsvorrichtung nach mindestens einem der vorhergehenden Ansprüche, **dadurch gekennzeichnet**, daß der Lösering (20) in einer axial gerichteten Ringnut (25) in einem axialen Fortsatz (26) des Kolbens (8) entgegen der Kraft einer Feder (27) axial verschiebbar ist und daß im Lösering (20) und im Kolbenfortsatz (26) mehrere in Verriegelungsstellung beider Teile (20, 26) jeweils miteinander fluchtende Radialbohrungen (28, 29) vorgesehen sind, wobei in jeder Radialbohrung (29) des Kolbenfortsatzes (26) ein Steuerstift (30) und in jeder Radialbohrung (28) des Löseringes (20) ein durch eine Druckfeder (32) radial nach außen belasteter Sperrstift (31) angeordnet ist, der in Verriegelungsstellung teilweise in die Radialbohrung (29) des Kolbenfortsatzes (26) eingreift. (Fig. 2, 3)

10. Betätigungsvorrichtung nach Anspruch 9, **dadurch gekennzeichnet**, daß die Feder (27) in der Ringnut (25) angeordnet ist.

11. Betätigungsvorrichtung nach mindestens einem der vorhergehenden Ansprüche, **dadurch gekennzeichnet**, daß der Lösering (20) an seiner dem Kolben (8) zugekehrten Seite mehrere achsparallele Führungsbolzen (34) aufweist, die in achsparallelen Führungsbohrungen (35) eines Kolbenfortsatzes (26) verschiebbar geführt sind, daß jeder Führungsbolzen (34) eine Ringnut (34a) aufweist, daß an der dem Lösering (20) zugekehrten Stirnseite des Kolbenfortsatzes (26) ein geschlitzter, radial nach außen federnder Sperring (36) angeordnet ist, der im Bereich jedes Führungsbolzens (34) eine Durchgangsbohrung (37) aufweist, durch die sich der jeweilige Führungsbolzen (34) hindurch erstreckt, und daß der Sperring (36) an seinem Außenumfang eine mit der Steuerfläche (33) zusammenwirkende Steuerkante (36a) aufweist, derart, daß der Sperring (36) zur Verriegelung des Läseringes (20) gegenüber dem Kolben (8) durch seine radiale Vorspannung in die Ringnuten (34a) der Führungsbolzen (34) einrastbar ist. (Fig. 5)

12. Betätigungsvorrichtung nach mindestens einem der vorhergehenden Ansprüche, **dadurch gekennzeichnet**, daß zwischen dem Kolben (8) und dem Lösering (20) mindestens eine axial wirkende Druckfeder (27, 38) vorgesehen ist.

13. Betätigungsvorrichtung nach mindestens einem der vorhergehenden Ansprüche, **dadurch gekennzeichnet**, daß an dem Lösering (20) mehrere axial gerichtete, Federbelastete, doppelarmige Sperrklinken (41) schwenkbar gelagert sind, deren einer Arm (41a) sich zur Verriegelung des Löseringes (20) gegenüber dem Kolben (8) an einem axialen Fortsatz (26) desselben abstützt und deren anderer Arm (41b) mit der Steuerfläche (17) zusammenwirkt. (Fig. 6)

14. Betätigungsvorrichtung nach mindestens einem der vorhergehenden Ansprüche, **dadurch gekennzeichnet**, daß der Lösering (20) an einem axialen, ringförmigen Fortsatz (26) des Kolbens (8) axial verschiebbar gelagert ist, daß in dem Fortsatz (26) mehrere Radialbohrungen (43) mit darin angeordneten Sperrkugeln (44) vorgesehen sind, die in Verriegelungsstellung von Lösering (20) und Kolben (8) in eine Ringnut (45) des Löseringes (20) eingreifen und daß ein zum Fortsatz (26) konzentrischer, federbelasteter Steuerring (47) vorgesehen ist, der die Sperrkugeln (44) in Verriegelungsstellung in die Ringnut (45) drückt und sie zur Radialbewegung freigibt, wenn der Steuerring (47) nach einem Teil des Lösehubes des Kolbens (8) an einem Anschlag (12a) anstößt.

15. Betätigungsvorrichtung nach Anspruch 14, **dadurch gekennzeichnet**, daß der Anschlag (12a) durch den Ringabsatz (12a) der Spannstange (3) bzw. des Spannringes (12) gebildet ist.

16. Betätigungsvorrichtung nach mindestens einem der vorhergehenden Ansprüche, **dadurch gekennzeichnet**, daß zwischen dem Kolben (8) bzw. dem Kolbenfortsatz (26) und dem Spannring (12) eine Druckfeder (39) angeordnet ist.

## Claims

1. An actuating arrangement for a tool or workpiece clamping device (1) in a machine tool spindle (2), comprising a clamping bar (3) which is axially displaceable in the clamping direction (S) in the spindle (7) under the force of a spring arrangement (11), and a wedge transmission assembly (9) which is operative between the spindle (7) and the clamping bar (3), with freely movable balls (14) which respectively bear against three cone surfaces (15,16,17) of which the first cone surface (15) is provided on a clamping sleeve (10) which is axially displaceable in the clamping direction (S) on the clamping bar (3) under the force of the spring arrangement (11), the second cone surface (16) is provided on a clamping ring (12) connected to the clamping bar (3) and the third cone surface (17) is provided on a support ring (13) arranged stationarily with respect to the spindle (7), wherein the second and third cone surfaces (16,17) are inclined relative to each other in such a way that, upon movement of the clamping bar (3) in opposition to the clamping direction (S), self-locking occurs between said cone surfaces (16,17) and the balls (14) disposed therebetween, and further comprising a piston-cylinder unit (7a,8) whose piston (8) firstly acts on the clamping sleeve (10) in a first phase of its release stroke movement directed oppositely to the clamping direction (S), and also acts on an annular shoulder (12a) on the clamping bar (3) in a second phase, characterised in that provided on the support ring (13) in a region thereof which is between the third cone surface (17) and the spring arrangment (11) is a fourth cone surface (18) which is inclined relative to the axis (A) of the clamping bar in opposite relationship to the third cone surface (17) and which expands in a conical configuration towards the spring arrangement (11)so that at the beginning of the clamping stroke movement produced by the spring arrangement (11) the balls (14) bear against the fourth cone surface (18) and act on the clamping ring (12) to produce a travel step-up effect, in a second phase of the clamping stroke movement they bear against the third cone surface (17) and act on the clamping ring (12) to produce a force-increasing effect, and in a last phase of the oppositely directed release stroke movement they again bear against the fourth cone surface (18) and act on the clamping sleeve (10) in the direction of the spring arrangement (11) to produce a force-increasing effect, in that the outside diameter (D) of the clamping ring (12) is smaller than the inside diameter (D1) of the support ring (13) at the radially narrowest location (13a) and in that the piston (8) of the piston-cylinder (7a,8) unit is releasably connected to a release ring (20) which concentrically surrounds the clamping ring (12) and which is provided in the region of the balls (14), by way of a locking means (21 to 24) which acts in dependence on travel and which during a first phase of the release stroke movement of the piston (8) axially locks same to the release ring (20) in a thrust-resistant fashion and releases said locking action in dependence on travel movement just before the balls (14) have reached the radially narrowest location (17a) of the third cone surface (17) and at that time the piston (8) or an extension (26) thereof bears against the annular shoulder (12a) on the clamping bar (3).

2. An actuating arrangement according to claim 1 characterised in that the angle of inclination (β) of the third cone surface (17) with respect to the axis (A) of the clamping bar is smaller than the angle of inclination (α) of the fourth cone surface (18) relative to the axis (A) of the clamping bar.

3. An actuating arrangement according to at least one of the preceding claims characterised in that the first and fourth cone surfaces (15, 18) are inclined relative to each other in such a way that no self-locking action occurs between said cone surfaces (15, 18) and the balls (14) disposed therebetween, in the clamping stroke movement of the clamping sleeve (10).

4. An actuating arrangement according to at least one of the preceding claims characterised in that the angle of inclination (β) of the third cone surface (17) with respect to the axis (A) of the clamping bar decreases towards the spring arrangement (11) in the region of the radially narrowest location (13a) of the support ring (13) so that in that region the self-locking action between the second and third cone surfaces (16, 17) and the balls (14) disposed therebetween is eliminated.

5. An actuating arrangement according to at least one of the preceding claims characterised in that the support ring (13') is provided between the third and fourth cone surfaces (17, 18) with a cylindrical surface (19), the axis of which coincides with the axis (A) of the clamping bar.

6. An actuating arrangement according to claim 1 characterised in that the clamping ring (12) is in one piece with the clamping bar (3).

7. An actuating arrangement according to at least one of the preceding claims characterised in that the locking means (21, 22, 23) is unlocked by way of a control surface (33) provided on the support ring (13).

8. An actuating arrangement according to claim 7 characterised in that the control surface is formed by the third cone surface (17).

9. An actuating arrangement according to at least one of the preceding claims characterised in that the release ring (20) is axially displaceable against the force of a spring (27) in an axially directed annular groove (25) in an axial extension (26) of the piston (8) and that provided in the release ring (20) and in the piston extension (26) are a plurality of radial bores (28, 29) which are respectively aligned with each other in the locking position of the two components (20, 26), wherein a control pin (30) is disposed in each radial bore (29) in the piston extension (26) and a locking pin (31) which is urged radially outwardly by a compression spring (32) is disposed in each radial bore (28) in the release ring (20), the locking pin (31) partially engaging into the radial bore (29) in the piston extension (26) in the locking position (Figures 2 and 3).

10. An actuating arrangement according to claim 9 characterised in that the spring (27) is arranged in the annular groove (25).

11. An actuating arrangement according to at least one of the preceding claims characterised in that at its side towards the piston (8) the release ring (20) has a plurality of guide pins (34) which are in parallel relationship with the axis and which are displaceably guided in guide bores (35) extending in parallel relationship to the axis in a piston extension (26), that each guide pin (34) has an annular groove (34a), that arranged at the end of the piston extension (26) which is towards the release ring (20) is a slit, radially outwardly springing locking ring (36) which in the region of each guide pin (34) has a through bore (37) through which the respective guide pin (34) extends, and that at its outer periphery the locking ring (36) has a control edge (36a) co-operating with the control surface (33) in such a way that for locking of the release ring (20) with respect to the piston (8) the locking ring (36) can be engaged by its radial prestressing into the annular grooves (34a) in the guide pins (34) (Figure 5).

12. An actuating arrangement according to at least one of the preceding claims characterised in that at least one axially operative compression spring (27, 38) is provided between the piston (8) and the release ring (20).

13. An actuating arrangement according to at least one of the preceding claims characterised in that pivotably mounted on the release ring (20) are a plurality of axially directed, spring-loaded, double-armed locking pawls (41) of which one arm (41a) bears against an axial extension (26) of the piston (8) for locking of the release ring (20) with respect to the piston while the other arm (41b) thereof co-operates with the control surface (17) (Figure 6).

14. An actuating arrangement according to at least one of the preceding claims characterised in that the release ring (20) is axially displaceably mounted on an axial, annular extension (26) of the piston (8), that provided in the extension (26) are a plurality of radial bores (43) with locking balls (44) which are arranged therein and which in the locking position of the release ring (20) and the piston (8) engage into an annular groove (45) in the release ring (20), and that there is provided a spring-loaded control ring (47) which is concentric with respect to the extension (26) and which urges the locking balls (44) into the annular groove (45) in the locking position and releases them for radial movement when the control ring (47) bears against an abutment (12a) after a part of the release stroke movement of the piston (8).

15. An actuating arrangement according to claim 14 characterised in that the abutment (12a) is formed by an annular shoulder (12a) on the clamping bar (3) or the clamping ring (12).

16. An actuating arrangement according to at least one of the preceding claims characterised in that a compression spring (39) is disposed between the piston (8) or the piston extension (26) and the clamping ring (12).

## Revendications

1. Dispositif d'actionnement pour un porte-outil ou porte-pièce (1) dans une broche de machine-outil (2), avec une tige de serrage (3) pouvant être axialement déplacée dans la direction de serrage (S) dans la broche (7) sous l'action d'un ensemble de ressort (11), avec un mécanisme de transmission conique (9) agissant entre la broche (7) et la tige de serrage (3) et présentant des billes (14) librement mobiles, qui s'appuient respectivement contre trois surfaces coniques (15, 16, 17), la première surface conique (15) étant prévue sur une douille de serrage (10) pouvant être déplacée axialement dans la direction de serrage (S) sur la tige de serrage (3) sous l'action de l'ensemble de ressort (11), la deuxième surface conique (16) étant prévue sur une bague de serrage (12) assemblée à la tige de serrage (3) et la troisième surface conique (17) étant prévue sur une bague de contre-appui (13) disposée stationnairement par rapport à la broche (7), la deuxième et la troisième surfaces coniques (16, 17) étant inclinées l'une vers l'autre de telle sorte que, lors du déplacement de la tige de serrage (3) à l'encontre de la direction de serrage (S), il se produit un blocage automatique entre ces surfaces coniques (16, 17) et les billes (14) qui se trouvent entre ces surfaces, et avec une unité cylindre-piston (7a, 8), dont le piston (8) agit initialement sur la douille de serrage (10) dans une première phase de sa course de desserrage dirigée à l'encontre de la direction de serrage (S), et agit également sur un décrochement annulaire (12a) de la tige de serrage (3) dans une deuxième phase, **caractérisé** en ce qu'une quatrième surface conique (18) est prévue sur la bague de contre-appui (13), dans une région de cette bague qui se trouve entre la troisième surface conique (17) et l'ensemble de ressort (11), surface qui est inclinée par rapport à l'axe (A) de la tige de serrage en opposition à la troisième surface conique (17) et qui s'élargit coniquement en direction de l'ensemble de ressort (11), de telle sorte qu'au début de la course de serrage de la douille de serrage (10) produite par l'ensemble de ressort (11), les billes (14) s'appuient sur la quatrième surface conique (18) et agissent comme transmetteurs de course sur la bague de serrage (12), que dans une deuxième phase de la course de serrage, les billes (14) s'appuient contre la troisième surface conique (17) et agissent comme amplificateurs de force sur la bague de serrage (12), et que dans une dernière phase de la course de desserrage dirigée en direction opposée, les billes (14) s'appuient à nouveau contre la quatrième surface conique (18) et agissent comme amplificateurs de force sur la douille de serrage (10) en direction de l'ensemble de ressort (11), en ce que le diamètre extérieur (D) de la bague de serrage (12) est inférieur au diamètre intérieur (D1) de la bague de contre-appui (13) en son point radialement le plus étroit (13a), et en ce que le piston (8) de l'unité cylindre-piston (7a, 8) est relié de façon détachable à une bague de desserrage (20), entourant concentriquement la bague de serrage (12) et prévue dans la région des billes (14), au moyen d'un mécanisme de verrouillage (21 à 24) agissant en fonction de la course, mécanisme qui, pendant une première phase de la course de desserrage du piston (8), verrouille ce dernier à la bague de desserrage (20) de façon résistante à la poussée axiale, et qui libère ce verrouillage en fonction de la course peu avant que les billes (14) aient atteint le point radialement le plus étroit (17a) de la troisième surface conique (17), le piston (8) ou un prolongement (26) de ce dernier s'appliquant à cet instant contre le décrochement annulaire (12a) de la tige de serrage (3).

2. Dispositif d'actionnement selon la revendication 1, **caractérisé** en ce que l'angle d'inclinaison (β) de la troisième surface conique (17) par rapport à l'axe (A) de la tige de serrage est inférieur à l'angle d'inclinaison (α) de la quatrième surface conique (18) par rapport à l'axe (A) de la tige de serrage.

3. Dispositif d'actionnement selon au moins une des revendications précédentes, **caractérisé** en ce que la première et la quatrième surfaces coniques (15, 18) sont inclinées l'une vers l'autre de telle sorte que, lors de la course de serrage de la douille de serrage (10), il ne se produit pas de blocage automatique entre ces surfaces coniques (15, 18) et les billes (14) qui se trouvent entre ces surfaces.

4. Dispositif d'actionnement selon au moins une des revendications précédentes, **caractérisé** en ce que l'angle d'inclinaison (β) de la troisième surface conique (17) par rapport à l'axe (A) de la tige de serrage diminue en direction de l'ensemble de ressort (11) dans la région du point radialement le plus étroit (13a) de la bague de contre-appui (13), de sorte qu'est supprimé, dans cette région, le blocage automatique entre la deuxième et la troisième surfaces coniques (16, 17) et les billes (14) qui se trouvent entre ces surfaces.

5. Dispositif d'actionnement selon au moins une des revendications précédentes, **caractérisé** en ce que la bague de contre-appui (13') présente, entre la troisième et la quatrième surfaces coniques (17, 18), une surface cylindrique (19) dont l'axe coïncide avec l'axe (A) de la tige de serrage.

6. Dispositif d'actionnement selon la revendication 1, **caractérisé** en ce que la bague de serrage (12) est solidaire de la tige de serrage (3).

7. Dispositif d'actionnement selon au moins une des revendications précédentes, **caractérisé** en ce que le mécanisme de verrouillage (21, 22, 23) peut être déverrouillé au moyen d'une surface de commande (33) prévue sur la bague de contre-appui (13).

8. Dispositif d'actionnement selon la revendication 7, **caractérisé** en ce que la surface de commande (33) est formée par la troisième surface conique (17).

9. Dispositif d'actionnement selon au moins une des revendications précédentes, **caractérisé** en ce que la bague de desserrage (20) peut être déplacée axialement, à l'encontre de la force d'un ressort (27), dans une rainure annulaire (25) orientée axialement qui est pratiquée dans un prolongement axial (26) du piston (8), et en ce que sont prévus dans la bague de desserrage (20) et dans le prolongement (26) du piston plusieurs perçages radiaux (28, 29) qui sont respectivement alignés entre eux dans la position de verrouillage des deux pièces (20, 26), une pointe de commande (30) étant disposée dans chaque perçage radial (29) du prolongement (26) du piston et une pointe d'arrêt (31), sollicitée radialement vers l'extérieur par un ressort de pression (32), étant disposée dans chaque perçage radial (28) de la bague de desserrage (20), la pointe d'arrêt (31) s'engageant partiellement dans le perçage radial (29) du prolongement (26) du piston dans la position de verrouillage. (Figures 2, 3)

10. Dispositif d'actionnement selon la revendication 9, **caractérisé** en ce que le ressort (27) est disposé dans la rainure annulaire (25).

11. Dispositif d'actionnement selon au moins une des revendications précédentes, **caractérisé** en ce que la bague de desserrage (20) présente, sur son côté tourné vers le piston (8), plusieurs goujons de guidage (34) d'axes parallèles qui sont guidés à déplacement dans des perçages de guidage (35) d'axes parallèles d'un prolongement (26) du piston, en ce que chaque goujon de guidage (34) présente une rainure annulaire (34a), en ce qu'est disposée, sur le côté frontal du prolongement (26) du piston qui est tourné vers la bague de desserrage (20), une bague d'arrêt fendue (36), à élasticité radialement vers l'extérieur, qui présente dans la région de chaque goujon de guidage (34) un perçage traversant (37) s'étendant à travers le goujon de guidage respectif (34), et en ce que la bague d'arrêt (36) présente, sur sa circonférence extérieure, un bord de commande (36a) coopérant avec la surface de commande (33) de telle sorte qu'en vue du verrouillage de la bague de desserrage (20) par rapport au piston (8), la bague d'arrêt (36) peut être enclenchée par sa précontrainte radiale dans les rainures annulaires (34a) des goujons de guidage (34). (Figure 5)

12. Dispositif d'actionnement selon au moins une des revendications précédentes, **caractérisé** en ce qu'au moins un ressort de pression (27, 38) agissant axialement est prévu entre le piston (8) et la bague de desserrage (20).

13. Dispositif d'actionnement selon au moins une des revendications précédentes, **caractérisé** en ce que sont montés à pivotement sur la bague de desserrage (20) plusieurs cliquets d'arrêt (41) orientés axialement, sollicités par ressort et à deux bras, dont un bras (41a) s'appuie contre un prolongement axial (26) du piston (8) en vue du verrouillage de la bague de desserrage (20) par rapport à ce piston (8), et dont l'autre bras (41b) coopère avec la troisième surface de commande (17). (Figure 6)

14. Dispositif d'actionnement selon au moins une des revendications précédentes, **caractérisé** en ce que la bague de desserrage (20) est montée à déplacement axial sur un prolongement annulaire axial (26) du piston (8), en ce que plusieurs perçages radiaux (43) sont prévus dans le prolongement (26), perçages dans lesquels sont disposées des billes d'arrêt (44) qui s'engagent dans une rainure annulaire (45) de la bague de desserrage (20) dans la position de verrouillage de la bague de desserrage (20) et du piston (8), et en ce qu'est prévue une bague de commande (47), concentrique au prolongement (26) et sollicitée par ressort, bague qui presse les billes d'arrêt (44) dans la rainure annulaire (45) dans la position de verrouillage, et qui les libère pour le déplacement radial lorsque la bague de commande (47) bute contre une butée (12a) après une partie de la course de desserrage du piston (8).

15. Dispositif d'actionnement selon la revendication 14, **caractérisé** en ce que la butée (12a) est formée par le décrochement annulaire (12a) de la tige de serrage (3) ou encore de la bague de serrage (12).

16. Dispositif d'actionnement selon au moins une des revendications précédentes, **caractérisé** en ce qu'un ressort de pression (39) est disposé entre le piston (8), ou encore le prolongement (26) du piston, et la bague de serrage (12).
